Europäisches Patentamt

European Patent Office

Office européen des brevets

(11) Veröffentlichungsnummer : **0 111 870**
**B1**

(12) **EUROPÄISCHE PATENTSCHRIFT**

(45) Veröffentlichungstag der Patentschrift :
**11.10.89**

(51) Int. Cl.⁴ : **C 25 B   3/04**, C 25 B   1/00,
**B 01 J 19/12**

(21) Anmeldenummer : **83112492.0**

(22) Anmeldetag : **12.12.83**

(54) Verfahren und Vorrichtung zur Reduktion, insbesondere Methanisierung von Kohlendioxid.

(30) Priorität : **13.12.82 DE 3246070**

(43) Veröffentlichungstag der Anmeldung :
**27.06.84 Patentblatt 84/26**

(45) Bekanntmachung des Hinweises auf die Patenterteilung : **11.10.89 Patentblatt 89/41**

(84) Benannte Vertragsstaaten :
**BE DE FR GB IT NL**

(56) Entgegenhaltungen :
**WO-A-79 /009 92**
**US-A- 4 240 882**
**CHEMICAL ABSTRACTS, Band 92, Nr. 14, April 1980, Seite 153, Nr. 113407f, Columbus, Ohio, US; M. HALMANN et al.: "Semiconductor-electrolyte solar cells for the photoelectrochemical reduction of carbon dioxide to organic fuel" & COMM. EUR. COMMUNITIES, EUR 1979**
**CHEMICAL ABSTRACTS, Band 92, Nr. 14, April 1980, Seite 151, Nr. 113387z, Columbus, Ohio, US; V. GURUSWAMY et al.: "The photo-electrochemical production of C-C bonds from carbon dioxide" & INT. J. ENERGY RES. 1979, 3(4), 397-9**
**NATURE, Band 277, 22. Februar 1979, Seiten 637-638, Basingstoke, GB; T. INOUE et al.: "Photoelectrocatalytic reduction of carbon dioxide in aqueous suspensions of semiconductor powders"**

(73) Patentinhaber : **Metzner, Helmut, Prof.Dr.**
**Sternbergstrasse 11**
**D-7400 Tübingen 9 (DE)**

(72) Erfinder : **Metzner, Helmut, Prof.Dr.**
**Sternbergstrasse 11**
**D-7400 Tübingen 9 (DE)**

(74) Vertreter : **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8**
**D-8000 München 40 (DE)**

## Beschreibung

Die Erfindung betrifft ein Verfahren und eine Vorrichtung zur Reduktion, insbesondere Methanisierung, von Kohlendioxid oder Carbonat- und/oder Bicarbonat-Anionen.

Grüne Pflanzen und etliche farbstoffhaltige Mikroorganismen sind in der Lage, Kohlendioxid zur Stufe von Aldehyden und Ketonen (Kohlenhydraten), Alkoholen (z. B. Mannit oder Glycerin) oder auch zu Kohlenwasserstoffen verschiedener Kettenlänge zu reduzieren. Die für diese endergonische Prozeßkette erforderliche Energie entnehmen sie absorbiertem Sonnenlicht. Die technisch genutzten fossilen Brennstoffe (Kohle, Erdöl, Erdgas) sind Produkte der Photosynthese von Pflanzen früherer Erdzeitalter.

Es ist wiederholt versucht worden, den natürlichen Photosyntheseprozeß in anorganischen Modellen nachzuvollziehen. Geglückte Teilreaktionen sind mehrfach beschrieben worden (z. B. Metzner, H.: Hoppe-Seyler's Z. physiol. Chem. 349, 1586, 1968) ; frühere Behauptungen, wonach diese Prozesse bis zur Stufe von Kohlenhydraten geführt werden können (Baly E.C.C.: Photosynthesis, Methuen & Co., Ltd., London 1940), hielten indessen einer kritischen Nachprüfung nicht stand.

Die elektrolytische Reduktion von Kohlendioxid zur Stufe von Ameisensäure ist seit mehr als 100 Jahren bekannt (Beketov, N.N.: Zhurn. Russ. Fiz. Khim. Obshchestva 1, 33, 1869). Dabei kann das anfallende Produkt katalytisch in Kohlendioxid und Wasserstoff gespalten werden (US-A-4 160 816 und William, R. et al : Appl. Phys. Lett. 33, 381, 1978). Auch ist wiederholt beschrieben worden, daß die elektrolytische Reduktion von Kohlendioxid an der Oberfläche von Blei-, Aluminium- oder Edelstahl-Elektroden so geführt werden kann, daß $C_2$-Verbindungen, insbesondere Oxalsäure (DE-A-28 54 487) und Glykolsäure (Kaiser, U. und Heitz, E.: Ber. Bunsenges. Phys. Chem. 77, 818, 1973) oder $C_4$-Verbindungen, insbesondere Äpfelsäure (Bewick, A. und Greener, G.P.: Tetrahedron Lett., 53, 4623, 1969) entstehen. Bekannt ist außerdem eine rein photochemische Reduktion von Kohlendioxid zu Ameisensäure und Formaldehyd an der Oberfläche belichteter Metallsalze, insbesondere des zweiwertigen Eisens (Getoff, N.: Z. Naturforsch. 17b, 88, 1962) sowie — über die Zwischenstufe des Formaldehyds hinaus bis zum Methanol — durch p-Typ-Halbleiter, insbesondere Silicium, Cadmiumtellurid, Galliumarsenid und -phosphid (US-A-4 219 392).

Die US-A-4 240 882 beschreibt ebenfalls die photochemische Reduktion von Kohlendioxid an der Oberfläche eines belichteten p-Typ-Halbleiters über Ameisensäure, Formaldehyd und Methanol zu Methan.

In der WO-79/00992 ist eine photochemische Elektrode beschrieben, die auf einem leitenden Träger eine Schicht aus rotem Quecksilbersulfid aufweist. Das Quecksilbersulfid kann in einer anderen Ausführungsform auch als Suspension oder Fließbett vorliegen. Bei Bestrahlung mit sichtbarem Licht eignet sich die Elektrode zur photochemischen Stromerzeugung oder zur Wasserelektrolyse.

Es wurde nun gefunden, daß durch eine spezielle Kombination von elektrolytischer Primärreaktion (Reduktion von Kohlendioxid zu Ameisensäure) mit photochemischen Folgereaktionen an der Oberfläche belichteter Teilchen eines p-Typ-Halbleiters überraschend vorteilhafte Ergebnisse erzielt werden können. Allein diese spezielle Zweiteilung ermöglicht eine hohe Ausbeute an Methanol sowie, falls erwünscht, eine Weiterführung der Reaktion bis zur Stufe des Methans.

Gegenstand der Erfindung ist ein Verfahren zur elektrolytischen und photochemischen Reduktion von Kohlendioxid oder Carbonat- und/oder Bicarbonat-Anionen in einem Kathodenraum, in dem eine oder mehrere Kathoden und mit einer Lichtquelle bestrahlte Teilchen eines p-Typ-Halbleiters miteinander in Kontakt sind, das dadurch gekennzeichnet ist, daß man eine oder mehrere Kathoden aus einem Metall mit hoher Wasserstoff-Überspannung aus der Gruppe Quecksilber, Amalgam, Blei oder Indium verwendet, an die ein zur Reduktion von Kohlendioxid zu Ameisensäure ausreichendes Potential angelegt ist.

Im erfindungsgemäßen Verfahren erfolgt die Reduktion des Kohlendioxids zur Ameisensäure (primäres Reaktionsprodukt) an der Oberfläche von Metallkathoden hoher Wasserstoff-Überspannung. Das primäre Reaktionsprodukt tritt im gleichen Reaktionsraum mit belichteten Halbleiterteilchen in Kontakt, die z. B. als Suspension in einem geeigneten Suspensionsmedium vorliegen, z. B. Wasser, Acetonitril, Dimethylformamid oder Propylencarbonat, und durch einen eingeleiteten Kohlendioxidstrom oder durch Rühren oder Schütteln der Suspension in der Schwebe gehalten werden. In einer alternativen Ausführungsform haften die Halbleiterteilchen an der Kathode, was z. B. durch Anpressen der Teilchen auf die Kathodenoberfläche mit Hilfe einer Glasfritte erreicht werden kann.

Durch Verwendung geeigneter Halbleitermaterialien mit hohem Fermi-Potential läßt sich die weitere Reduktion der primär gebildeten Carboxylgruppe (—COOH) zunächst zur Carboxylgruppe (—CHO) und schließlich zur alkoholischen Hydroxylgruppe (—CH$_2$OH) erzielen. Um die Reduktion bis zur Stufe des Methans (CH$_4$) weiterzuführen, werden dem Reaktionssystem vorzugsweise zusätzlich zu den Halbleiterkristallen Metallverbindungen zugesetzt, die die Reduktion über die Stufe des Methanols hinaus katalysieren. Hierzu eignen sich insbesondere Oxide von Metallen der Gruppe VIII des Periodensystems, z. B. Fe$_2$O$_3$ und Oxide von Platin-Metallen, wie RuO$_2$.

Bei entsprechender Prozeßführung entstehen im Reaktionsgefäß außer Methanol bzw. Methan verschiedene Sekundärprodukte. Die Zusammensetzung dieser Gemische, unter denen z. B. Glykolsäure und Äpfelsäure nachgewiesen werden können, hängt von der Wahl des Kathodenmaterials und der Stromdichte ab. Äpfelsäure entsteht vorwiegend im Kontakt mit Quecksilber, Glykolsäure an Bleikathoden, sofern die Stromdichten zwischen 0,5 und 1,5 mA/cm² gehalten werden.

Produkte mit einem unter dem des verwendeten Suspensionsmediums liegenden Siedepunkt lassen sich aus dem Reaktionsraum abdestillieren und in einer Vorlage auffangen. Reaktionsprodukte, die schwer lösliche Salze bilden, können durch Zusatz entsprechender Ionen (z. B. Calcium- oder Zinkionen im Falle der Oxalsäure) zum Suspensionsmedium ausgefällt werden. Sie lassen sich dann aufgrund des hohen spezifischen Gewichtes der Fällungsprodukte aus dem Reaktionsraum abtrennen.

Gegenstand der Erfindung ist ferner eine Vorrichtung zur Durchführung des Verfahrens nach Anspruch 1 mit einer oder mehreren in einem Kathodenraum angeordneten Kathoden und einer oder mehreren in einem Anodenraum angeordneten Anoden sowie einer inneren oder äußeren Lichtquelle zum Bestrahlen von Halbleiterteilchen, die mit der oder den Kathoden in Kontakt sind, wobei die Kathode(n) aus einem Metall mit hoher Wasserstoff-Überspannung aus der Gruppe Quecksilber, Amalgam, Blei oder Indium bestehen.

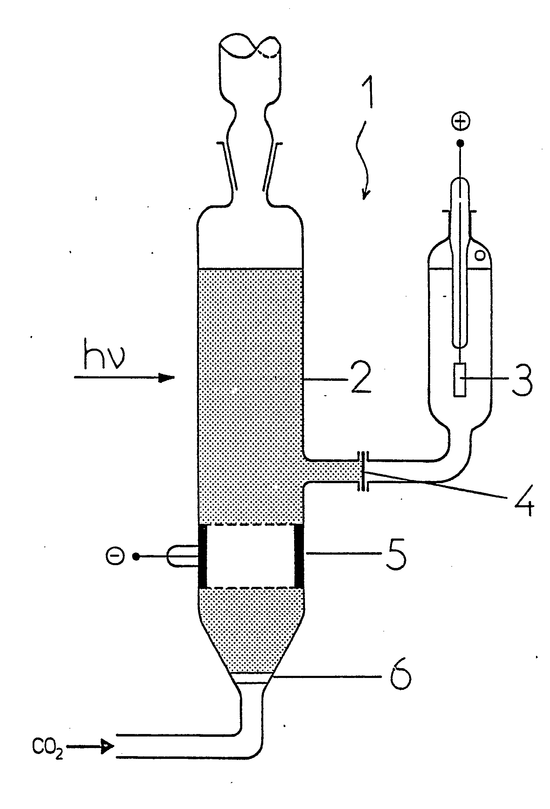

Eine spezielle Ausführungsform einer derartigen Vorrichtung ist in der Zeichnung dargestellt. Als Reaktionsraum dient ein transparentes Gefäß 1, das durch eine Ionenaustauscher-Membran 4 in einen Kathodenraum 2 und einen Anodenraum 3 unterteilt werden kann. Im Kathodenraum 2 befindet sich eine Kathode 5 mit hoher Wasserstoff-Überspannung. Geeignete Kathodenmaterialien sind Quecksilber, Blei und Indium. Da die Verwendung von reinem Quecksilber als Kathodenmaterial besondere Anforderungen an die Geometrie des Reaktionsgefäßes stellt, werden an seiner Stelle vorzugsweise Amalgame verwendet, z. B. Kupfer- oder Zinkamalgam.

Die Kathode taucht in eine Suspension von Halbleiterkristallen ein. Als Halbleitermaterialien eignen sich solche vom p-Typ, wobei Oxide von Metallen der Gruppe V a (z. B. $V_2O_5$ oder $Nb_2O_5$) sowie von Actiniden (z. B. $U_3O_8$) und Lanthaniden (z. B. $La_2O_3$ oder $Sm_2O_3$) bzw. Gemische dieser Oxide besonders bevorzugt sind. Um eine möglichst große Grenzfläche zwischen Suspensionsmedium und Kristallen zu erzielen, werden die verwendeten Halbleiter fein pulverisiert. In der gezeigten Ausführungsform werden die Halbleiterteilchen durch einen konstanten Gasstrom oder durch Rühren der Flüssigkeit in der Schwebe gehalten. Die optimale Halbleitermenge im Kathodenraum liegt bei etwa 0,4 bis 0,8 g/l.

Im Falle der zusätzlichen Verwendung von Metallverbindungen, die die Weiterreduktion zu Kohlenwasserstoffen katalysieren, beträgt deren Zusatzmenge vorzugsweise 0,1 bis 0,2 g/l.

Der Kathodenraum wird mit elektromagnetischer Strahlung, vorzugsweise sichtbarem Licht, Ultraviolett- und/oder Infrarot-Licht bestrahlt. Sofern hierfür keine künstlichen Lichtquellen verwendet werden, kann Sonnenlicht eingespiegelt werden. Als ausreichend hat sich eine Energiedichte von 500 W/m² erwiesen. Durch diese Bestrahlung wird die Suspension so weit aufgeheizt, daß die flüchtigen Reaktionsprodukte (z. B. Methanol oder Methan) von selbst absieden.

Die Zufuhr des Kohlendioxids erfolgt entweder durch Einleiten eines $CO_2$-Gasstromes über eine Fritte 6 oder durch Zugabe von Carbonat- und/oder Bicarbonatlösungen. Dabei sollte ein pH-Wert von 8,5 möglichst nicht unterschritten werden.

Bei Einsatz von Metall-Anoden (z. B. aus Platin, Kupfer oder Aluminium) wird der Anodenraum vorzugsweise durch eine Ionenaustauscher-Membran 4 abgeteilt. Bei Verwendung von Graphitplatten oder -stäben als Anoden genügt es, den Kontakt des Anodenmaterials mit den Halbleiter- bzw. Katalysatorteilchen durch eine weitporige Trennschicht zu verhindern.

Die zur Reduktion von Kohlendioxid erforderliche Potentialdifferenz (in wässrigen Suspensionen ca. 2 Volt) wird durch eine äußere Spannungsquelle erzeugt. Dabei können anstelle herkömmlicher Gleichspannungsquellen auch Solarzellen verwendet werden.

Die Spannung kann aber auch durch photoelektrochemische Reaktion(en) aufgebaut werden. In diesem Falle werden eine oder beide Elektroden mit einem weitgehend lichtbeständigen Farbstoff, z. B. Phthalocyanin, beschichtet und auf diese Weise für die einfallende Strahlung sensibilisiert. Bei Belichtung kommt es dann zur Ausbildung von Potentialdifferenzen (Becquerel-Effekt; vgl. z. B. Noddack, W. et al : Z. Elektrochem. 56, 735, 1952). Die Bestrahlung kann bei dieser Ausführungsform durch die zum Belichten der Halbleiterteilchen verwendete Lichtquelle oder durch ein oder mehrere andere Lichtquellen erfolgen. Um jedoch die erforderliche Minimalspannung aufzubringen, müssen in diesem Falle im Kathoden- und/oder Anodenraum jeweils mehrere Elektrodenbleche bzw. -stäbe hintereinander geschaltet werden.

Die folgenden Beispiele erläutern die Erfindung, ohne sie jedoch zu beschränken.

Beispiel 1

Zur Erzielung einer optimalen Ausbeute an Methanol wird als Elektrolyt eine wässrige 0,5 M Lösung von $Na_2CO_3$ und $NaHCO_3$ (1 : 1, v/v) unter Zusatz von 0,1 M Tetramethylammoniumchlorid als Leitsalz verwendet. Als Kathode dient in diesem Falle Kupferamalgam, als Anode Graphit. Die angeschlossene Spannungsquelle wird so eingestellt, daß zwischen Kathode und Anode eine Spannung von 2,4 V und eine Stromdichte von 1,5 mA/cm² resultieren. Als Katalysator werden im Kathodenraum 0,5 g/l einer Mischung (1 : 1) von Nioboxid ($NbO_2$) und Lanthanoxid ($La_2O_3$) suspendiert.

Beispiel 2

Unter Verwendung der in der Zeichnung dargestellten Vorrichtung wird Methanol hergestellt, indem man einen permanenten $CO_2$-Gasstrom in eine Suspension von 0,5 g/l $U_3O_8$ in Acetonitril einleitet. Als Kathodenmaterial wird Indium verwendet. Die angelegte Spannung beträgt 2 V, die Stromdichte 1,0 mA/cm².

Beispiel 3

Um die Reduktion über die Stufe des Methanols bis zu Methan weiterzuführen, wird dem Reaktionssystem von Beispiel 1 zusätzlich eine Su-spension von 0,1 g/l feinteiligem $RuO_2$ zugesetzt.

**Patentansprüche**

1. Verfahren zur elektrolytischen und photochemischen Reduktion von Kohlendioxid oder Carbonat- und/oder Bicarbonat-Anionen in einem Kathodenraum, in dem eine oder mehrere Kathoden und mit einer Lichtquelle bestrahlte Teilchen eines p-Typ-Halbleiters miteinander in Kontakt sind, dadurch gekennzeichnet, daß man eine oder mehrere Kathoden aus einem Metall mit hoher Wasserstoff-Überspannung aus der Gruppe Quecksilber, Amalgam, Blei oder Indium verwendet, an die ein zur Reduktion von Kohlendioxid zu Ameisensäure ausreichendes Potential angelegt ist.

2. Verfahren nach Anspruch 1, dadurch gekennzeichnet, daß man eine oder mehrere Kathoden aus Kupfer- oder Zinkamalgam verwendet.

3. Verfahren nach Anspruch 1 oder 2, dadurch gekennzeichnet, daß man Teilchen eines p-Typ-Halbleiters mit hohem Fermi-Potential verwendet.

4. Verfahren nach Anspruch 3, dadurch gekennzeichnet, daß man Oxide von Metallen der Gruppe Va des Periodensystems, Oxide von Acti-niden oder Lanthaniden oder Mischungen dieser Oxide als Halbleiterteilchen verwendet.

5. Verfahren nach einem der Ansprüche 1 bis 4, dadurch gekennzeichnet, daß die Kathode(n) mit einer Suspension von fein verteilten Halbleiterteilchen in einem wässrigen oder nicht-wässrigen Medium in Kontakt sind.

6. Verfahren nach einem der Ansprüche 1 bis 4, dadurch gekennzeichnet, daß die Halbleiterteilchen an der oder den Kathoden haften.

7. Verfahren nach einem der Ansprüche 1 bis 6, dadurch gekennzeichnet, daß man in den Kathodenraum zusätzlich zu den Halbleiterteilchen Metallverbindungen einbringt, welche die Reduktion über die Stufe des Methanols hinaus katalysieren.

8. Verfahren nach Anspruch 7, dadurch gekennzeichnet, daß man als katalysierende Metallverbindungen Oxide von Metallen der Gruppe VIII des Periodensystems verwendet.

9. Verfahren nach einem der Ansprüche 1 bis 8, dadurch gekennzeichnet, daß die Elektrodenspannung durch eine externe Spannungsquelle erzeugt wird.

10. Verfahren nach einem der Ansprüche 1 bis 8, dadurch gekennzeichnet, daß die Elektroden-spannung durch Belichten von sensibilisierten Elektroden und die dadurch hervorgerufene(n) photochemische(n) Reaktion(en) erzeugt wird.

11. Vorrichtung zur Durchführung des Verfahrens nach Anspruch 1 mit einer oder mehreren in einem Kathodenraum angeordneten Kathoden und einer oder mehreren in einem Anodenraum angeordneten Anoden sowie einer inneren oder äußeren Lichtquelle zum Bestrahlen von Halbleiterteilchen, die mit der oder den Kathoden in Kontakt sind, dadurch gekennzeichnet, daß die Kathode(n) aus einem Metall mit hoher Wasserstoff-Überspannung aus der Gruppe Quecksilber, Amalgam, Blei oder Indium bestehen.

12. Vorrichtung nach Anspruch 11, gekenn-zeichnet durch mehrere hintereinander geschalte-te sensibilisierte Kathoden und/oder Anoden sowie eine oder mehrere Lichtquellen zum Bestrahlen der sensibilisierten Kathoden und/oder Anoden.

13. Vorrichtung nach Anspruch 11 oder 12, gekennzeichnet durch eine zwischen dem Kathodenraum und dem Anodenraum angeordnete Io-nenaustauscher-Membran oder Fritte.

14. Vorrichtung nach einem der Ansprüche 11 bis 13, gekennzeichnet durch einen Einlaß für Kohlendioxid oder Carbonat- und/oder Bicarbonatlösungen.

15. Vorrichtung nach einem der Ansprüche 11 bis 14, gekennzeichnet durch einen Auslaß für die entstehenden flüchtigen Produkte.

16. Vorrichtung nach einem der Ansprüche 11 bis 15, gekennzeichnet durch eine Rühreinrichtung zum Suspendieren der Halbleiterteilchen.

**Claims**

1. A process for the electrolytic and photochemical reduction of carbon dioxide or carbonate and/or bicarbonate anions in a cathode chamber wherein one or more cathodes are in contact with p-type semiconductor particles which are exposed to light radiation, characterized in that one or more cathodes consisting of a metal having a high hydrogen overvoltage and being selected from mercury, amalgam, lead or indium are used, to which a potential is applied which is sufficiently high to reduce carbon dioxide to formic acid.

2. A process according to claim 1, characterized in that one or more cathodes consisting of copper or zinc amalgam are used.

3. A process according to claim 1 or 2, characterized in that p-type semiconductor particles having a high Fermi-level are used.

4. A process according to claim 3, characterized in that oxides of metals of group Va of the periodic system, oxides of actinides or lanthanides, or mixtures of said oxides are used as semiconductor particles.

5. A process according to any one of claims 1 to 4, characterized in that the cathode(s) is/are in contact with a suspension of finely divided semiconductor particles in an aqueous or nonaqueous medium.

6. A process according to any one of claims 1 to 4, characterized in that the semiconductor particles adhere to the cathode(s).

7. A process according to any one of claims 1 to 6, characterized in that in addition to the semiconductor particles metal compounds are introduced into the cathode chamber which catalyze the reduction beyond the stage of methanol.

8. A process according to claim 7, characterized in that the catalyzing metal compounds used are selected from oxides of metals of group VII of the periodic system.

9. A process according to any one of claims 1 to 8, characterized in that the electrode voltage is generated by an external power source.

10. A process according to any one of claims 1 to 8, characterized in that the electrode voltage is generated by irradiation of sensitized electrodes and the photochemical reaction(s) initiated thereby.

11. An apparatus for carrying out the process of claim 1 which comprises one or more cathodes provided in a cathode chamber, one or more anodes provided in an anode chamber and and internal or external light source for irradiating semiconductor particles which are in contact with the cathode(s), characterized in that the cathodes consist of a metal having a high hydrogen overvoltage and being selected from mercury, amalgam, lead or indium.

12. An apparatus according to claim 11, characterized in that several sensitized cathodes and/or anodes are connected in series and are irradiated with one or more light sources.

13. An apparatus according to claim 11 or 12, characterized in that a ion exchange membrane or frit is provided between the cathode chamber and the anode chamber.

14. An apparatus according to any one of claims 11 to 14, characterized in that an inlet for carbon dioxide or carbonate and/or bicarbonate solutions is provided.

15. An apparatus according to any one of claims 11 to 14 characterized in that an outlet for the volatile products formed is provided.

16. An apparatus according to any one of claims 11 to 15, characterized in that a stirring means for suspending the semiconductor particles is provided.

**Revendications**

1. Procédé pour la réduction électrolytique et photochimique de l'anhydride carbonique ou d'anions carbonate(s) et/ou bicarbonate(s) dans un espace cathodique, dans lequel une ou plusieurs cathodes et des particules d'un semi-conducteur de type p, irradiées par une source de lumière, sont en contact mutuel, procédé caractérisé en ce qu'on utilise une ou plusieurs cathodes en un métal ayant une grande surtension par rapport à l'hydrogène et choisi dans l'ensemble formé par le mercure, un amalgame, du plomb ou de l'indium, cathode(s) sur laquelle ou sur lesquelles on applique un potentiel suffisant pour assurer la réduction de l'anhydride carbonique en acide formique.

2. Procédé selon la revendication 1, caractérisé en ce qu'on utilise une ou plusieurs cathodes en un amalgame de cuivre ou de zinc.

3. Procédé selon la revendication 1 ou 2, caractérisé en ce qu'on utilise des particules d'un semi-conducteur de type p à potentiel de Fermi élevé.

4. Procédé selon la revendication 3, caractérisé en ce qu'on utilise des oxydes de métaux du groupe Va du Tableau Périodique, des oxydes d'actinides ou de lanthanides ou des mélanges de ces oxydes, comme particules semi-conductrices.

5. Procédé selon l'une des revendications 1 à 4, caractérisé en ce que la ou les cathodes est ou sont en contact avec une suspension de particules finement divisées d'un semi-conducteur dans un milieu aqueux ou non aqueux.

6. Procédé selon l'une des revendications 1 à 4, caractérisé en ce que les particules semi-conductrices adhèrent à la ou aux cathodes.

7. Procédé selon l'une des revendications 1 à 6, caractérisé en ce qu'on introduit dans l'espace cathodique, en plus des particules semi-conductrices, des composés de métaux qui catalysent la réduction en passant par l'étape du méthanol.

8. Procédé selon la revendication 7, caractérisé en ce qu'on utilise comme composés de métaux à rôle de catalyseurs des oxydes de métaux du groupe VIII du Tableau Périodique.

9. Procédé selon l'une des revendications 1 à 8, caractérisé en ce qu'on produit la tension entre les électrodes grâce à une source extérieure de tension électrique.

10. Procédé selon l'une des revendications 1 à 8, caractérisé en ce qu'on produit la tension entre les électrodes par éclairage d'électrodes sensibilisées et par la ou les réactions photochimique(s) ainsi provoquée(s).

11. Dispositif pour conduire le procédé selon la revendication 1, comportant une ou plusieurs cathodes disposée(s) dans un espace cathodique et une ou plusieurs anode(s) disposée(s) dans un espace anodique ainsi qu'une source interne ou externe de lumière pour irradier des particules semi-conductrices, qui sont en contact avec la ou les cathode(s), dispositif caractérisé en ce que la ou les cathode(s) consiste(nt) en un métal ayant une grande surtension par rapport à l'oxygène et qui est choisi dans l'ensemble formé par du mercure, un amalgame, du plomb ou de l'indium.

12. Dispositif selon la revendication 11, caractérisé en ce qu'il comporte plusieurs cathodes et/ou anodes sensibilisées, disposées l'une derrière l'autre, ainsi qu'une ou plusieurs sources lumineuses pour irradier les cathodes et/ou anodes sensibilisées.

13. Dispositif selon la revendication 11 ou 12, caractérisé en ce qu'il comporte une membrane échangeuse d'ions, ou une matière frittée, disposée entre l'espace cathodique et l'espace anodique.

14. Dispositif selon l'une des revendications 11 à 13, caractérisé en ce qu'il comporte une admission de l'anhydride carbonique ou de solutions de carbonate(s) ou de bicarbonate(s).

15. Dispositif selon l'une des revendications 11 à 14, caractérisé en ce qu'il comporte une sortie pour les produits volatils résultants.

16. Dispositif selon l'une des revendications 11 à 15, caractérisé en ce qu'il comporte un dispositif d'agitation pour mettre et maintenir en suspension les particules semi-conductrices.